# EUROPÄISCHE PATENTSCHRIFT

(11) **EP 2 234 847 B1**
(45) Veröffentlichungstag und Bekanntmachung des Hinweises auf die Patenterteilung: **13.07.2011**
(21) Anmeldenummer: 09701776.8
(22) Anmeldetag: 13.01.2009
(51) Int. Cl.: B60R 21/233, B60R 21/013

(54) **SICHERHEITSEINRICHTUNG FÜR EIN FAHRZEUG UND VERFAHREN ZUR STEUERUNG EINER SICHERHEITSEINRICHTUNG**
SAFETY DEVICE FOR A VEHICLE AND METHOD FOR CONTROLLING A SAFETY DEVICE
DISPOSITIF DE SÉCURITÉ POUR UN VÉHICULE ET PROCÉDÉ DE COMMANDE D'UN DISPOSITIF DE SÉCURITÉ

(30) Priorität: 19.01.2008 DE 102008005272
(43) Veröffentlichungstag der Anmeldung: 06.10.2010
(73) Patentinhaber: Autoliv Development AB, 447 83 Vårgårda (SE)
(72) Erfinder: MAYER, Johann, 85238 Petershausen (DE); SCHMIDBAUER, Thomas, 81925 München (DE); WOHLLEBE, Thomas, 38548 Calberlah (DE); GONTER, Mark, 31275 Lehrte (DE)
(74) Vertreter: Koch, Henning
(86) Internationale Anmeldenummer: PCT/EP2009/000131
(87) Internationale Veröffentlichungsnummer: WO 2009/090030

(56) Entgegenhaltungen:
- WO-A-2007/073944
- DE-A1- 10 107 273
- DE-A1- 19 806 773
- DE-A1-102005 009 763
- US-A1- 2002 166 710
- US-A1- 2005 156 411
- US-A1- 2006 170 202

## Beschreibung

Die Erfindung betrifft eine Sicherheitseinrichtung für ein Fahrzeug, insbesondere für ein Kraftfahrzeug, nach dem Oberbegriff des Anspruchs 1 sowie ein Verfahren zur Steuerung einer solchen Sicherheitseinrichtung nach dem Oberbegriff der Ansprüche 10 oder 11.

Es sind Sicherheitseinrichtungen für ein Fahrzeug, insbesondere für ein Kraftfahrzeug mit einem im nicht aktivierten Grundzustand zusammengefalteten Airbag bekannt, der bei einer Auslösung der Sicherheitseinrichtung durch ein Aktivierungssignal mittels eines Gasgenerators in Richtung Fahrzeuginnenraum aufblasbar ist. Dazu ist eine Crash-Sensorik vorhanden, die einen Fahrzeugaufprall erkennt und das Aktivierungssignal abgibt. Dabei ist es weiter bekannt, den Füllgrad und das Airbagvolumen für eine Optimierung der Rückhaltewirkung und eine Reduktion der Aggressivität des Airbags an erfasste Insassenparamter und/oder eine Unfallschwere anzupassen.

Dafür ist konkret eine Airbageinrichtung bekannt (DE 198 06 773 A1), bei der zur Herabsetzung der Aggressivität des Airbags gegenüber Fahrzeuginsassen, die sich in einer sogenannten "out-of-position"-Haltung befinden, vor dem Gaseintritt in den Airbag eine Vorkammer vorgesehen ist. In dieser Vorkammer ist eine Gasstromsteuerungseinheit angebracht, durch die die Intensität und/oder die Richtung des aus einem Gasgenerator gelieferten Gasvolumenstroms beeinflussbar ist.

Weiter sind solche Airbag-Sicherheitseinrichtungen bekannt, bei denen im aktivierten Airbag der Füllgrad und Innendruck dadurch variabel steuerbar ist, dass ein steuerbares Gasauslassventil als sogenanntes Vent vorgesehen ist, mit dem insbesondere während des Aufblasvorgangs gezielt eine Gasauslassöffnung zur Umgebung geschaffen wird. Dabei ist es bekannt ein Vent unmittelbar am Airbag und/oder integriert in einem AirbagModulgehäuse anzubringen (DE 10 2005 009 763 A1; DE 101 07 273 A1).

Weiter ist eine gattungsgemäße Sicherheitseinrichtung bekannt (US 2006/0170202 A1), bei der ein Airbag zur Anpassung an die Größe eines zu schützenden Fahrzeuginsassen zu unterschiedlichen Volumengrößen befüllbar ist. Diese Volumenvariabilität des Airbags wird über Fangbänder realisiert, die einerseits an der Innenseite einer sich entfaltenden

Airbagwand befestigt und die andererseits durch die Airbagentfaltung jeweils aus einer ortsfesten Führungsöffnung ausziehbar und dort mit entsprechend variabler, das Airbagvolumen bestimmender Fangbandlänge festklemmbar sind. Zudem ist ein damit mechanisch gekoppeltes Vent vorgesehen, welches in einer Doppelfunktion die Fangbandklemmung und zugleich die Freigabe der Ventöffnung durchführt.

Aufgabe der Erfindung ist es, eine gattungsgemäße Sicherheitseinrichtung für ein Fahrzeug, insbesondere für ein Kraftfahrzeug, so zu modifizieren und weiterzubilden, dass eine hohe Sicherheitsfunktion in Verbindung mit einer an sich bekannten Pre-Crash-Sensorik erreichbar ist.

Diese Aufgabe wird mit den Merkmalen des Anspruchs 1 gelöst.

Gemäß Anspruch 1 umfasst die Crash-Sensorik des Fahrzeugs sowohl eine Pre-Crash-Sensorik als auch eine In-Crash-Sensorik. Die Pre-Crash-Sensorik erkennt in der Regel bereits vor einem tatsächlichen Aufprall eine bevorstehende Kollision und gibt für diesen Fall ein Aktivierungssignal als Pre-Crash-Aktivierungssignal ab. Durch den zunehmenden Einsatz von Fahrerassistenzsystemen werden auch immer mehr Sensoren zur Umfeldüberwachung im Fahrzeug eingebaut, wobei diese Sensoren auch für eine Pre-Crash-Sensorik genutzt werden können. Vorteilhaft können dadurch bereits vor einer Kollision Sicherheitsmaßnahmen gesteuert ausgelöst werden, insbesondere Airbags und Gurtstraffer aktiviert werden. Nach dem derzeitigen Stand der Technik erkennt zwar eine Pre-Crash-Sensorik in der Regel eine bevorstehende Kollision, wobei diese Erkennung jedoch nicht hundertprozentig ist. Daher wird eine Kombination mit der bisher üblichen In-Crash-Sensorik als Rückfallebene vorgeschlagen, die einen tatsächlichen Aufprall erkennt und für diesen Fall ein In-Crash-Aktivierungssignal abgibt, wenn die Pre-Crash-Sensorik vorher die bevorstehende Kollision nicht erkannt und kein Pre-Crash-Aktivierungssignal abgegeben hat. Weiter wird erfindungsgemäß vorgeschlagen, dass der Airbag mit unterschiedlichen Airbagvolumina aufblasbar ist, wobei durch ein Pre-Crash-Aktivierungssignal in einem Pre-Crash-Modus der Aufblasvorgang für das größere Airbagvolumen und durch ein In-Crash-Aktivierungssignal in einem In-Crash-Modus der Aufblasvorgang für das relativ kleinere Airbagvolumen aktiviert wird.

Der Erfindung liegt somit die Erkenntnis zu Grunde, dass bei einer Pre-Crash-Auslösung der Sicherheitseinrichtung eine andere Auslegung des Systems als bisher möglich ist, wobei im Pre-Crash-Modus das Airbagvolumen wesentlich größer sein soll als das Airbagvolumen der bisherigen Standardairbags. Die Vorteile der Pre-Crash-Auslösung in Verbindung mit einem größeren Airbagvolumen bestehen insbesondere darin:
- Durch das relativ größere Airbagvolumen in Verbindung mit der Pre-Crash-Auslösung kann der zu schützende Fahrzeuginsasse bereits zu Beginn seiner kollisionsbedingten Vorveriagerung durch den Airbag wirksam abgestützt werden.
- Die Energieabsorption des relativ größeren Airbags ist besser.
- Die Rückhaltewirkung eines Sicherheitsgurts und des relativ größeren Airbags in Verbindung mit der Pre-Crash-Auslösung kann besser aufeinander abgestimmt werden.
- Die Abstützung eines Fahrzeuginsassen durch den relativ größeren Airbag ist insgesamt großflächiger, wobei sich auch ein verbesserter Schutz bei einem Schrägaufprall ergibt.
- Ein leicht nach vorn gebeugt sitzender Fahrzeuginsasse kann bei einer Pre-Crash-Auslösung durch den relativ größeren Airbag sanft in den Sitz zurückgedrückt werden.
- Durch die Pre-Crash-Auslösung des Airbags steht eine vergleichsweise längere Aufblaszeit zur Verfügung, die zur Befüllung des größeren Airbagvolumens genutzt werden kann, wobei zudem die Entfaltungsgeschwindigkeit und damit die Aggressivität des Airbags gegenüber einem Insassen reduziert werden kann.

Als Rückfallebene, wenn die Pre-Crash-Sensorik eine bevorstehende Kollision, beispielsweise durch ungünstige Sensorrandbedingungen nicht erkennt, ist eine Auslösung des Airbags durch die In-Crash-Sensorik jedoch weiter zwingend erforderlich, welche aber ein relativ kleineres Airbagvolumen entsprechend einem heutigen Standardairbag erfordert. Diesem Erfordernis wird dadurch Rechnung getragen, dass der verwendete Airbag mit variablem Volumen entsprechend einem Pre-Crash-Modus oder In-Crash-Modus befüllbar ist.

Das kleinere Airbagvolumen soll somit in einer bevorzugten Ausführungsform dem Airbagvolumen eines bisherigen Standardairbags entsprechen und das größere Airbagvolumen für den Pre-Crash-Modus kann demgegenüber wesentlich größer, insbesondere um einen Faktor 1,3 bis 2,0 größer sein. Je nach den Gegebenheiten kann das Airbagvolumen gesteuert zwischen einem Minimalvolumen und einem Maximalvolumen auch für Zwischengrößen variierbar sein, wodurch verbesserte Feinabstimmungen möglich sind.

In einer weiteren Ausgestaltung ist zur Airbaginnendruckanpassung ein Gasauslassventil als steuerbares Vent vorgesehen. Im Pre-Crash-Modus wird zudem der Aufblasvorgang mit einer längeren Aufblaszeit im Vergleich zu einem In-Crash-Modus durchgeführt, wodurch unter anderem die Aggressivität des Airbags reduziert wird.

In einem ersten konkreten bevorzugten Konzept wird die Volumenvariabilität des Airbags über Fangbänder realisiert. Diese sind einerseits an der Innenseite einer sich entfaltenden Airbagwand befestigt und andererseits mit einem freien Ende durch die Airbagentfaltung jeweils aus einer ortsfesten Führungsöffnung ziehbar. Dort sind sie dann mit entsprechend variabler, das gewünschte Airbagvolumen bestimmender aktiver Fangbandlänge gesteuert festklemmbar. Zudem ist zur Airbaginnendruckanpassung das steuerbare Vent im Airbagmodulgehäuse integriert. Das steuerbare Vent wird auch dazu benutzt, im In-Crash-Modus mit dem kleineren Airbagvolumen die überschüssige Gasmenge abzuleiten.

Die Ventöffnung kann dabei durch Verlagerung eines wenigstens eine Gasauslassöffnung freigebenden Ventilteils, vorzugsweise durch einen pyrotechnischen Antrieb erfolgen, wobei in einer Doppelfunktion damit direkt oder indirekt eine Klemmvorrichtung zur Fangbandklemmung gekoppelt ist und betätigt wird. Ein solches Ventilteil kann insbesondere ein pyrotechnisch gesteuert verstellbarer Ventilschieber am Modulgehäuse sein.

In einer weiteren konkreten Ausführung kann das steuerbare Vent durch einen pyrotechnisch gesteuert verlagerbaren Gehäusewandbereich des Modulgehäuses gebildet sein, wobei auch hier mit der Verlagerung eine Fangbandklemmung gekoppelt sein kann.

In einem zweiten alternativen konkreten Konzept wird die Volumenvariabilität des Airbags über eingeschlagene Faltungen mit Reißnähten und/oder Reißnahtfeldern realisiert. Dabei reißen die Reißnähte und/oder Reißnahtfelder für ein relativ kleines Airbagvolumen nicht oder nur teilweise auf. Beim Erreichen eines bestimmten Airbaginnendrucks oder beim Erreichen bestimmter Airbaginnendruckstufen reißen dagegen die Reißnähte insgesamt oder gestuft für eine Entfaltung eines größeren Airbagvolumens auf. Auch bei diesem Konzept und bei dieser Ausführungsform ist zur Airbaginnendruckanpassung ein Gasauslassventil als steuerbares Vent vorgesehen, das vorzugsweise im Modulgehäuse integriert ist. Das Vent kann konkret entsprechend dem vorstehenden ersten Fangband-Konzept ausgebildet sein, wobei jedoch im vorliegenden Reißnaht-Konzept keine Fangbänder verwendet sind und somit keine Festklemmvorrichtung vorgesehen ist.

Bei allen vorstehenden Ausführungen wird bevorzugt als Gasgenerator ein einstufiger Gasgenerator verwendet, wobei die Befüllanpassungen über das steuerbare Vent vorgenommen werden.

Bei einer bevorzugten Weiterbildung und modifizierten Ausführungsform der Sicherheitseinrichtung ist ein erstes Vent im Modulgehäuse integriert, welches zur Steuerung des Gasmassenstroms zur Befüllung des Airbags im Pre-Crash-Modus mit großem Airbagvolumen (A + B) oder im In-Crash-Modus mit kleinerem Airbagvolumen (A) ansteuerbar ist. Zudem ist ein zweites Vent vorzugsweise im Airbag integriert und pyrotechnisch auslösbar, welches für eine Adaptivität des Airbags, insbesondere eine Anpassung des Airbagdrucks an die Unfallschwere und/oder an Insassenparameter ansteuerbar ist. Damit ist hier die Steuerung für die Größe des Airbagvolumens, die jeweils dem Pre-Crash-Modus und dem In-Crash-Modus zugeordnet ist, von der Steuerung der Adaptivität des Airbags entkoppelbar und zwei Vents zugeordnet. Dadurch ist eine solche Steuerung insgesamt einfacher beherrschbar und ggf. genauer und gezielter durchführbar.

Das Verfahren zur Steuerung der Sicherheitseinrichtung nach dem ersten Konzept mit den Fangbändern wird so ausgeführt, dass im Pre-Crash-Modus beim Vorliegen eines Pre-Crash-Aktivierungssignals die Fangbänder angeklemmt frei bleiben und durch Aktivierung des Gasgenerators der Airbag mit großem Airbagvolumen befüllt wird, wobei das Vent während des Aufblasvorgangs geschlossen bleibt. In einer Ausgestaltung der Steuerung kann zudem oder alternativ das Vent gegebenenfalls nach oder während des Aufblasvorgangs zur Anpassung der Airbagcharakteristik an Unfallschwere und/oder Insassenparameter zumindest teilweise geöffnet werden. Falls eine bevorstehende Kollision nicht erkannt wurde und daher ein In-Crash-Modus vorliegt, wird zur Befüllung eines relativ kleineren Airbagvolumens während des Aufblasvorgangs das Vent früh geöffnet und gleichzeitig werden zur Volumenbegrenzung des Airbags die Fangbänder festgeklemmt. Auch hier kann über eine Variation des Aktivierungszeitpunkts des Vents und der Fangbandklemmung eine merkliche Adaptivität, insbesondere für eine Anpassung des Airbagvolumens an die Unfallschwere oder an Insassenparameter durchgeführt werden. Die Adaptivität kann im vorliegenden ersten Konzept, wie vorstehend ausgeführt, ausschließlich oder zusätzlich über ein zweites, vorzugsweise im Airbag integriertes Vent gesteuert werden.

Beim Steuerungsverfahren für das zweite Konzept mit der Airbagvolumenvariabilität durch Reißnähte und/oder Reißnahtfelder wird im Pre-Crash-Modus beim Vorliegen eines Pre-Crash-Aktivierungssignals bei geschlossenem Vent zuerst das kleine Airbagvolumen gefüllt. Beim Erreichen eines bestimmten Airbaginnendrucks reißen die Reißnähte und/oder Reißnahtfelder auf, wodurch das große Airbagvolumen befüllt wird. In einer Ausgestaltung der Steuerung kann zudem oder alternativ das Vent gegebenenfalls nach oder während des Aufblasvorgangs zur Anpassung der Airbagcharakteristik an die Unfallschwere und/oder an Insassenparameter zumindest teilweise geöffnet werden. Im In-Crash-Modus wird dagegen zur Befüllung eines relativ kleineren Airbagvolumens das Vent während des Aufblasvorgangs bereits früh geöffnet, wobei durch eine gezielte Steuerung der Ventöffnung, insbesondere des Aktivierungszeitpunktes und/oder der freigegebenen Größe einer Ventöffnung eine Adaptivität, insbesondere an eine Unfallschwere oder an Insassenparameter durchführbar ist. Auch beim zweiten Konzept ist eine Steuerung der Adaptivität mittel eines zweiten Vents durchführbar.

Anhand einer Zeichnung wird die Erfindung näher erläutert.

Es zeigen:
- Fig. 1: eine schematische Darstellung einer Sicherheitseinrichtung mit einem durch eine Pre-Crash-Sensorik ausgelösten Airbag,
- Fig. 2: die Sicherheitseinrichtung nach Fig. 1 mit dem durch eine In-Crash-Sensorik aus- gelösten Airbag mit einer durch eine Fangbandklemmung verringerten Airbag- volumen,
- Fig. 3: eine erste Ausführungsform einer Ventausbildung mit gekoppelter Fangband- klemmung,
- Fig. 4: eine zweite Ausführungsform einer Ventausbildung mit gekoppelter Fangband- klemmung,
- Fig. 5: eine dritte Ausführungsform einer Ventausbildung mit gekoppelter Fangband- klemmung in einer schematischen Seitenschnittansicht,
- Fig. 6: die Anordnung nach Fig. 5 in einer Draufsicht,
- Fig. 7: ein Flussdiagramm des Steuerungsablaufs bei einer Ausführungsform mit Fang- bandklemmung
- Fig. 8: eine Sicherheitseinrichtung mit einem zweiten Konzept für einen volumen- variablen Airbag,
- Fig. 9: eine Airbagausführung für die Sicherheitseinrichtung nach Fig. 8 in einer Drauf- sicht mit Reißnähten,
- Fig.: 10eine Airbagausführung für die Sicherheitseinrichtung nach Fig. 8 in einer Drauf- sicht mit Reißnahtfeldern,
- Fig. 11: ein Flussdiagramm des Steuerungsablaufs bei einer Ausführungsform des Air- bags mit Reißnähten, und
- Fig. 12: eine schematische Darstellung einer Ausführungsform der Sicherheitseinrichtung mit zwei steuerbaren Vents.

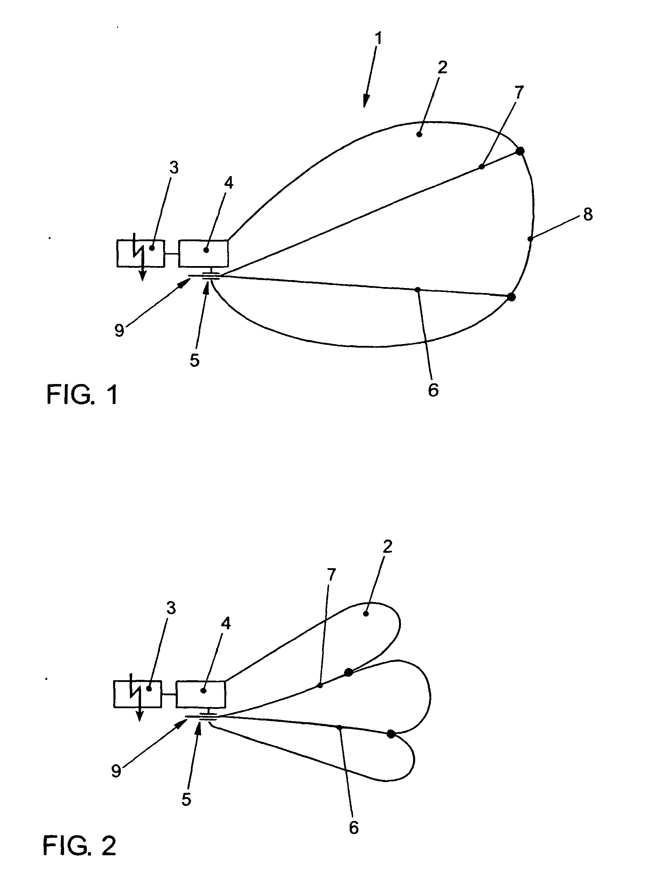

In den Figuren 1 und 2 ist in schematischer Darstellung dieselbe Sicherheitseinrichtung 1 gezeigt, mit einem volumenvariablen Airbag 2, der über einen einstufigen Gasgenerator 3 jeweils bereits befüllt ist, wobei mit dem Gasgenerator 3 ein Vent 4 mit einer Fangbandklemmvorrichtung 5 zusammenwirkt.

Zur Realisierung unterschiedlicher Airbagvolumina sind hier zwei Fangbänder 6, 7 verwendet, die einerseits an der Innenseite eines sich in Richtung auf einen Insassen entfaltenden Airbagwandbereichs 8 befestigt sind und andererseits aus einer klemmbaren Führungsöffnung 9 der Fangbandklemmvorrichtung 5 ausziehbar sind.

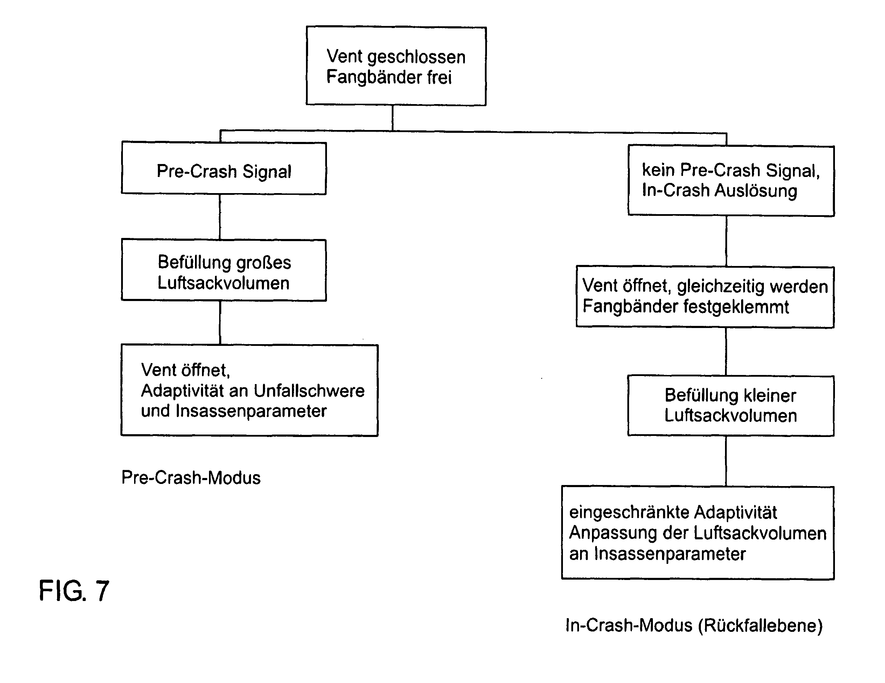

In Fig. 1 wurde die Airbagauslösung über eine (nicht dargestellte) Pre-Crash-Sensorik durchgeführt (siehe linker Zweig im Ablaufdiagramm nach Fig. 7), wobei der Airbag 2 ohne Fangbandklemmung mit seinem vollen großen Volumen befüllt wurde.

In Fig. 2 wurde dagegen die Airbagauslösung als Rückfallebene mit einer (nicht dargestellten) In-Crash-Sensorik aktiviert, wobei die Fangbänder 6, 7 in einem verkürzten Zustand in der Führungsöffnung 9 mit der Fangbandklemmung 5 für ein gegenüber Fig. 1 relativ kleineres Airbagvolumen geklemmt wurden. Für eine Innendruckanpassung wurde dazu frühzeitig auch das Vent 4 geöffnet (siehe rechter Zweig im Ablaufdiagramm nach Fig. 7).

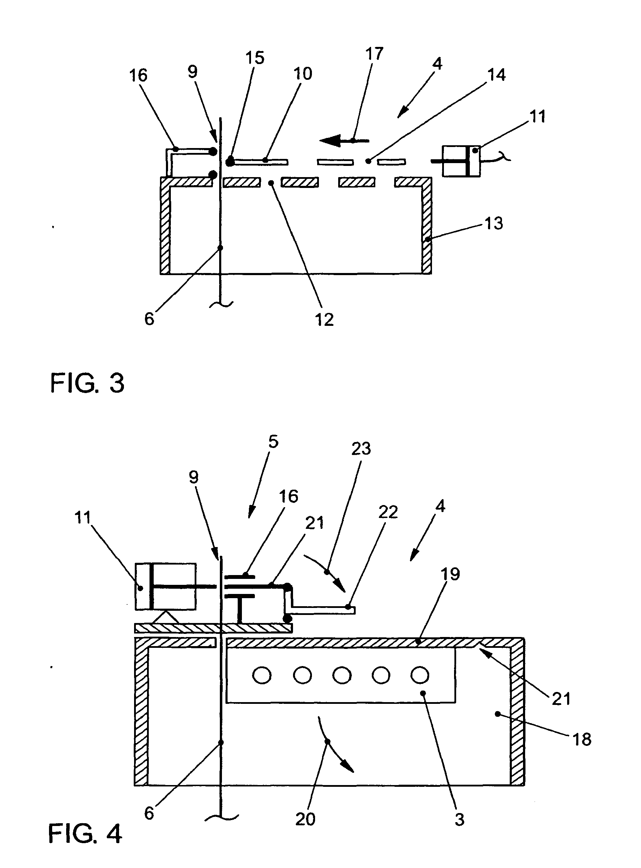

In einer konkreten ersten Ausführungsform nach Fig. 3 ist das steuerbare Vent 4 durch einen linear verstellbaren Ventilschieber 10 ausgeführt, der mittels eines pyrotechnischen Antriebs 11 betätigbar ist. Bei einer Verschiebung des Ventilschiebers 10 aus einer Grundstellung in seine Funktionsstellung werden Gasauslassöffnungen 12 an einem Modulgehäuse 13 und Gasauslassöffnungen 14 am Ventilschieber 10 übereinander geschoben, so dass ein Gasdurchtritt vom Modulgehäuse 13 zur Umgebung möglich ist.

Im Bereich des freien Ventitschieberendes 15 und eines zugeordneten Klemmschuhs 16 ist die Führungsöffnung 9 für ein Fangband 6 realisiert. Ersichtlich wird bei einer Verlagerung des Ventilschiebers 10 in seine Funktionsstellung (Pfeil 17) zusätzlich zur Öffnung der Gasauslassöffnungen 12, 14 das Fangband 6 durch das Ventilschieberende 15 im Klemmschuh 16 in der aktuell ausgezogenen Länge festgeklemmt.

Eine dazu alternative zweite Ausführungsform eines Vents 4 mit gekoppelter Fangbandklemmvorrichtung 5 ist in Fig. 4 dargestellt. Dazu ist ein Modulgehäuse 18 verwendet, bei dem an einem verschwenkbaren Wandbereich 19 der Gasgenerator 3 angebracht ist. Für eine betätigbare Verschwenkung des Wandbereichs 19 (Pfeil 20) ist eine Materialverdünnung als Filmscharnier 21 vorgesehen, wobei durch eine Verschwenkung die Ventfunktion realisiert ist, indem dadurch ein Schlitz im Modulgehäuse 18 als Gasauslassöffnung freigegeben wird. Die Verschwenkung erfolgt auch hier über einen pyrotechnischen Antrieb 11 mittels einer Kolbenstange 21, welche einen Winkelhebel 22 verschwenkt (Pfeil 23), und der seinerseits die Verschwenkung des Wandbereichs 19 bewirkt.

Durch ein Loch in der Kolbenstange 21 ist die Führungsöffnung 9 für das Fangband 6 gebildet. Bei einer Verlagerung der Kolbenstange 21 gelangt die Führungsöffnung 9 mit dem Fangband 6 in eine Kolbenstangenführung als Klemmschuh 16, so dass dadurch das Fangband 6 mit der aktuellen Fangbandlänge festgeklemmt und fixiert wird.

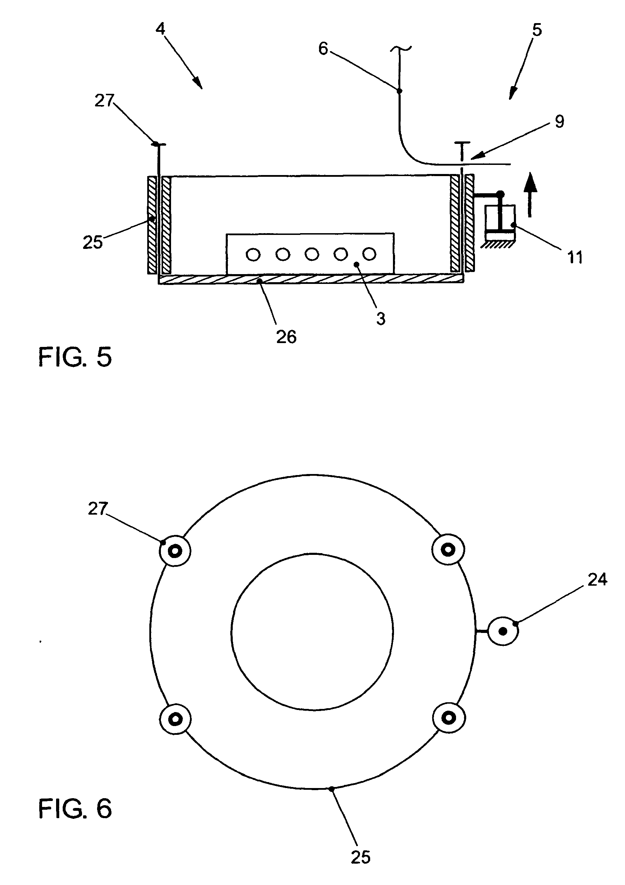

Eine alternative dritte Ausführungsform eines Vents 4 in Verbindung mit einer Fangbandklemmvorrichtung 5 ist in einer schematischen Seitenschnittdarstellung in Fig. 5 und in einer Draufsicht in Fig. 6 gezeigt: dazu ist wieder ein pyrotechnischer Antrieb 11 verwendet, mit dem ein zylindrischer Gehäusewandbereich 25 zur Freigabe von Gasauslassöffnungen gegenüber einer Modulgrundplatte 26 mit Gasgenerator 3 bis zu Anschlägen 27 verschiebbar ist. Ein Fangband 6 ist durch eine Führungsöffnung 9 an einem ortsfesten Modulgehäuseteil frei geführt. Bei einer Verlagerung des Gehäusewandbereichs 25 wird die Führungsöffnung 9 mit dem Fangband 6 überfahren, so dass das Fangband 6 in der aktuellen Fangbandlänge fixiert wird. Die Toleranzen der Führungsöffnungen sind dabei so dimensioniert, dass das Fangband 6 zwar festgeklemmt aber nicht abgeschert wird.

Im Diagramm nach Fig. 7 ist der Ablauf der Steuerung gezeigt, wobei jeweils von einem Grundzustand mit geschlossenem Vent und freien Fangbändern ausgegangen wird. Im linken Diagrammzweig ist der Ablauf im Pre-Crash-Modus und im rechten Diagrammzweig im In-Crash-Modus (Rückfallebene) angegeben.

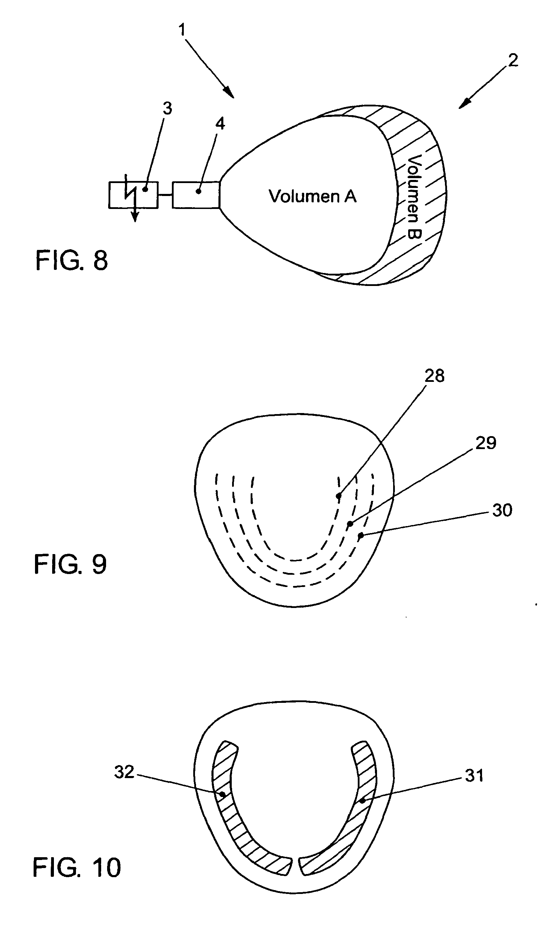

In Fig. 8 ist eine Sicherheitseinrichtung entsprechend Fig. 1 jedoch mit einem anderen Konzept für einen volumenvariablen Airbag 2 dargestellt. Auch hier sind ein Gasgenerator 3 und ein steuerbares Vent 4 vorgesehen. Das Vent 4 kann auch bei diesem Konzept ähnlich den konkreten Ausführungsformen entsprechend der Figuren 3 bis 6 ausgebildet sein, wobei jedoch die Fangbandklemmvorrichtung 5 entfällt, da die Volumenvariabilität bei diesem Konzept ohne Fangbänder realisiert ist.

In Fig. 8 ist ein kleineres Volumen A dargestellt, welches im In-Crash-Modus erzeugt wird oder als erste Befüllstufe im Pre-Crash-Modus, wobei dann noch zusätzlich zur Volumenvergrößerung der Volumenbereich B hinzukommt.

Dies wird im Pre-Crash-Modus dadurch erreicht, dass beabstandete Reißnähte 28, 29, 30 an eingeschlagenen Faltungen gemäß Fig. 9 oder Reißnahtfelder 31, 32 gemäß Fig. 10 bei Erreichen eines bestimmten Airbaginnendrucks zusammen oder gestuft für eine Entfaltung zum großen Airbagvolumen A + B aufreißen. Die Reißnähte 28, 29, 30 oder Reißnahtfelder 31, 32 können je nach den Gegebenheiten an verschiedenen Stellen und mit verschiedenen Formen angeordnet sein.

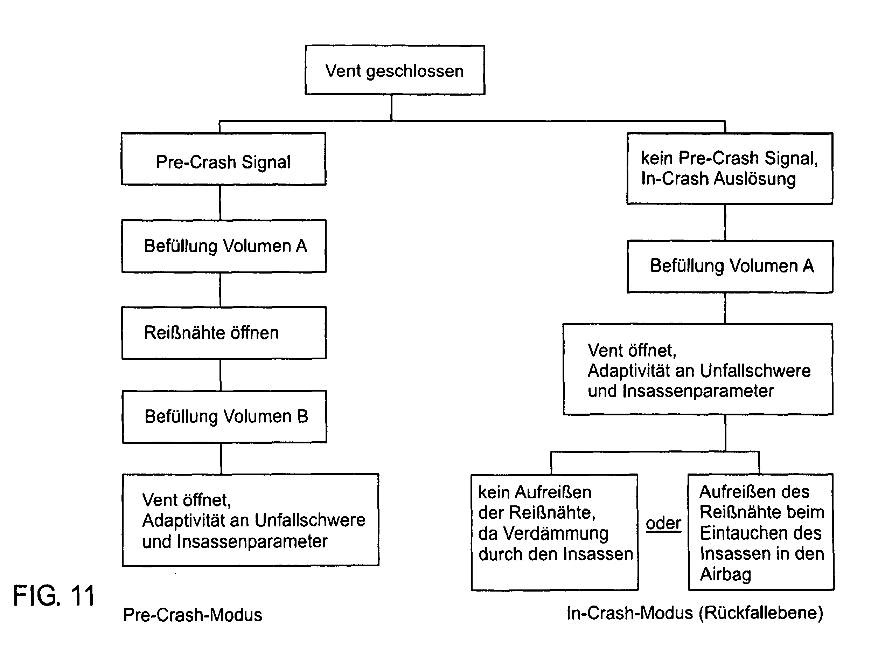

Im Diagramm nach Fig. 11 ist der Ablauf der Airbagauslösung für das Airbagkonzept nach den Figuren 8 bis 10 dargestellt: dabei wird jeweils von einem geschlossenen Vent ausgegangen. Der linke Diagrammzweig zeigt den Ablauf im Pre-Crash-Modus mit einer Befüllung zum großen Airbagvolumen A + B. Der rechte Diagrammzweig zeigt dagegen den Ablauf im In-Crash-Modus mit einer Befüllung des kleineren Airbagvolumens A.

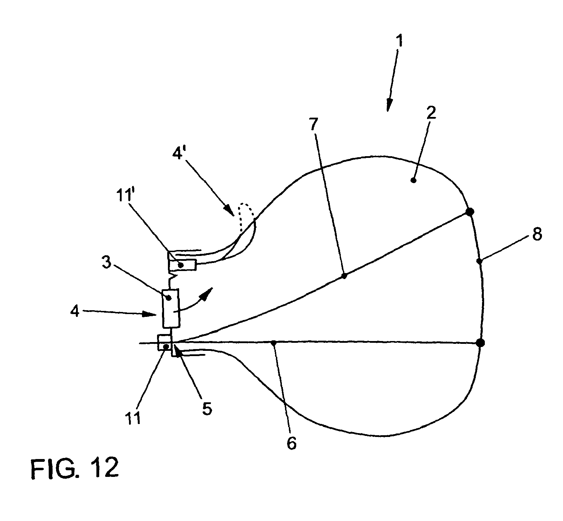

In einer modifizierten Weiterbildung einer Sicherheitseinrichtung 1 gemäß Fig. 12 ist der grundsätzliche Aufbau entsprechend der Figuren 1 und 2 verwendet mit einem Airbag 2, einem Gasgenerator 3, einem Vent 4 und einer Fangbandklemmung 5 sowie mit Fangbändern 6 und 7, welche an einem Airbagwandbereich 8 befestigt sind. Das Vent 4 mit der Fangbandklemmvorrichtung 5 ist lediglich schematisch dargestellt, soll jedoch konkret der Ausführung nach Fig. 4 entsprechen, wobei die Ventöffnung durch Wegklappen des Gasgenerators 3 bzw. eines Modulwandbereichs 19 gekoppelt mit einer Fangbandklemmung pyrotechnisch erfolgt. Die Ansteuerung dieses ersten Vents 4 erfolgt in Zuordnung zu einem Pre-Crash-Modus oder In-Crash-Modus.

Zusätzlich ist hier im Airbagwandbereich 8 ein zweites Vent 4' angebracht, welches unabhängig vom ersten Vent 4 über das Pyrotechnikelement 11' zur Steuerung der Adaptivität des Airbags 2, insbesondere zur Anpassung an die Unfallschwere und an Insassenparameter ansteuerbar ist.

### Bezugszeichenliste

- 1: Sicherheitseinrichtung
- 2: Airbag
- 3: Gasgenerator
- 4, 4': Vent
- 5: Fangbandklemmvorrichtung
- 6: Fangband
- 7: Fangband
- 8: Airbagwandbereich
- 9: Führungsöffnung
- 10: Ventilschieber
- 11, 11 ': Pyrotechnischer Antrieb
- 12: Gasauslassöffnung am Modul
- 13: Modulgehäuse
- 14: Gasauslassöffnung am Vent
- 15: Ventilschieberende
- 16: Klemmschuh
- 17: Pfeil
- 18: Modulgehäuse
- 19: Wandbereich
- 20: Pfeil
- 21: Kolbenstange
- 22: Winkelhebel
- 23: Pfeil
- 25: Gehäusewandbereich
- 26: Modulgrundplatte
- 27: Anschlag
- 28: Reißnähte
- 29: Reißnähte
- 30: Reißnähte
- 31: Reißnahtfelder
- 32: Reißnahtfelder
- 33: Reißnahtfelder

## Patentansprüche

1. Sicherheitseinrichtung für ein Fahrzeug, insbesondere für ein Kraftfahrzeug mit einem im nicht aktivierten Grundzustand zusammengefalteten Airbag (2), der bei einer Auslösung der Sicherheitseinrichtung (1) durch ein Aktivierungssignal mittels eines Gasgenerators (3) in Richtung Fahrzeuginnenraum mit unterschiedlichen Volumen aufblasbar ist, und
mit einer Crash-Sensorik, die einen Fahrzeugaufprall erkennt und dazu das Aktivierungssignal abgibt, ,
**dadurch gekennzeichnet,**
**dass** die Crash-Sensorik sowohl eine Pre-Crash-Sensorik als auch eine In-Crash-Sensorik umfasst, wobei
die Pre-Crash-Sensorik bereits vor einem tatsächlichen Aufprall eine bevorstehende Kollision in der Regel erkennt und für diesen Fall als Aktivierungssignal ein Pre-Crash-Aktivierungssignal abgibt, und
die In-Crash-Sensorik einen tatsächlichen Aufprall erkennt und für diesen Fall ein In-Crash-Aktivierungssignal abgibt, Rückfallebene, wenn die Pre-Crash-Sensorik vorher die bevorstehende Kollision nicht erkannt und kein Pre-Crash-Aktivierungssignal abgegeben hat, und
**dass** der Airbag zu einem größeren Airbagvolumen (Fig. 1; Volumen A + B) und einem demgegenüber relativ kleineren Airbagvolumen (Fig. 2; Volumen A) aufblasbar ist, wobei durch ein Pre-Crash-Aktivierungssignal in einem Pre-Crash-Modus der Aufblasvorgang für das größere Airbagvolumen (Fig. 1; Volumen A + B) und durch ein In-Crash-Aktivierungssignal in einem In-Crash-Modus der Aufblasvorgang für das relativ kleinere Airbagvolumen (Fig. 2; Volumen A + B) aktiviert wird.

2. Sicherheitseinrichtung nach Anspruch 1, **dadurch gekennzeichnet, dass** das relativ kleinere Airbagvolumen (Fig. 2; Volumen A) dem Airbagvolumen eines bisherigen Standardairbags entspricht und das größere Airbagvolumen (Fig. 1; Volumen A + B)) demgegenüber wesentlich größer, insbesondere um einen Faktor 1,3 bis 2,0 größer ist.

3. Sicherheitseinrichtung nach Anspruch 1 oder 2, **dadurch gekennzeichnet, dass** das Airbagvolumen gesteuert zwischen einem Minimalvolumen (Fig. 2; Volumen A) und einem Maximalvolumen (Fig. 1; Volumen A + B) auch für Zwischengrößen variierbar ist.

4. Sicherheitseinrichtung nach einem der Ansprüche 1 bis 3, **dadurch gekennzeichnet, dass** zur Airbag-Innendruckanpassung ein Gasauslassventil als steuerbares Vent (4) vorgesehen ist und der Aufblasvorgang bei einer Pre-Crash-Aktivierung vorzugsweise mit einer längeren Aufblaszeit im Vergleich zu einer In-Crash-Auslösung gesteuert wird.

5. Sicherheitseinrichtung nach einem der Ansprüche 1 bis 4, **dadurch gekennzeichnet, dass** die Volumenvariabilität des Airbags (2) über Fangbänder (6, 7) realisiert ist, die einerseits an der Innenseite einer sich entfaltenden Airbagwand (8) befestigt sind und die andererseits durch die Airbagentfaltung jeweils aus einer ortsfesten Führungsöffnung (9) ausziehbar und dort mit entsprechend variabler, das Airbagvolumen bestimmender Fangbandlänge festklemmbar sind, und dass zur Airbag-Innendruckanpassung ein steuerbares Vent (4) im Airbag-Modulgehäuse (13; 18; 25; 26) integriert ist.

6. Sicherheitseinrichtung nach Anspruch 5, **dadurch gekennzeichnet, dass** die Ventöffnung durch Verlagerung eines wenigstens eine Gasauslassöffnung freigebenden Ventteils (10; 19, 25) vorzugsweise durch Pyrotechnik erfolgt und damit direkt oder indirekt eine Klemmvorrichtung (5) zur Fangband-Klemmung gekoppelt und betätigbar ist.

7. Sicherheitseinrichtung nach Anspruch 6, **dadurch gekennzeichnet, dass** das steuerbare Vent durch einen pyrotechnisch gesteuert verstellbaren Ventilschieber (10) an einem Modulgehäuse (13) gebildet ist, der bei der Verstellung Gasauslassöffnungen (12, 14) am Modulgehäuse (13) freigibt und zugleich wenigstens ein Fangband (6) in einem Klemmschuh (16) festklemmt, und/oder dass das steuerbare Vent durch einen pyrotechnisch gesteuert verlagerbaren Gehäusewandbereich (19; 25) eines Modulgehäuses (18; 26), insbesondere einen verschiebbaren oder verschwenkbaren Gehäusewandbereich, an dem vorzugsweise der Gasgenerator (3) angebracht ist, gebildet ist, dergestalt, dass bei einer Verlagerung ein Teilbereich des Modulgehäuses, insbesondere mittels eines Kipphebels (22) und/oder an einer Linearführung, geöffnet wird und zugleich wenigstens ein Fangband (6) durch den Gehäusewandbereich oder einen Betätigungshebel festklemmbar ist.

8. Sicherheitseinrichtung nach einem der Ansprüche 1 bis 4, **dadurch gekennzeichnet, dass** die Volumenvariabilität des Airbags über eingeschlagene Faltungen mit Reißnähten (28, 29, 30) und/oder Reißnahtfelder (31, 32) realisiert ist, wobei die Reißnähte (28, 29, 30) und/oder Reißnahtfelder (31, 32) für ein relativ kleines Airbagvolumen nicht oder nur teilweise aufreißen und bei Erreichen eines bestimmten Airbag-Innendrucks oder beim Erreichen bestimmter AirbagInnendruckstufen nacheinander gestuft für eine Entfaltung eines größeren Airbagvolumens (A + B) aufreißen, und
dass zur Airbag-Innendruckanpassung ein Gasauslassventil als steuerbares Vent (4) vorgesehen ist, das vorzugsweise im Modulgehäuse integriert ist.

9. Sicherheitseinrichtung nach einem der Ansprüche 1 bis 8, **dadurch gekennzeichnet, dass** als Gasgenerator ein einstufiger Gasgenerator (3) verwendet wird.

10. Sicherheitseinrichtung nach einem der Ansprüche 1 bis 9, **dadurch gekennzeichnet,**
**dass** ein Vent (4) im Modulgehäuse integriert ist, welches zur Steuerung des Gasmassenstroms zur Befüllung des Airbags im Pre-Crash-Modus mit großem Airbagvolumen (A + B) oder im In-Crash-Modus mit kleinerem Airbagvolumen (A) ansteuerbar ist, und
**dass** ein zweites Vent (4'), vorzugsweise im Airbag integriert und pyrotechnisch auslösbar ist, welches für eine Adaptivität des Airbags, insbesondere eine Anpassung des Airbagvolumens an die Unfallschwere und/oder an Insassenparameter ansteuerbar ist.

11. Verfahren zur Steuerung einer Sicherheitseinrichtung nach einem der Ansprüche 5 bis 7, **dadurch gekennzeichnet,**
**dass** im Pre-Crash-Modus beim Vorliegen eines Pre-Crash-Aktivierungssignals die Fangbänder (6, 7) ungeklemmt frei sind und durch Aktivierung des Gasgenerators (3) der Airbag (2) mit großem Airbagvolumen (Fig. 1) befüllt wird, wobei das Vent (4) während des Aufblasvorgangs geschlossen bleibt und wobei zudem oder alternativ das Vent (4) gegebenenfalls nach oder während des Aufblasvorgangs zur Anpassung der Airbagcharakteristik an Unfallschwere und/oder Insassenparameter zumindest teilweise geöffnet wird oder diese Anpassung durch gesteuertes Öffnen eines zweiten Vents (4') erfolgt, und
**dass** im In-Crash-Modus beim Vorliegen eines In-Crash-Aktivierungssignals als Rückfallebene zur Befüllung eines relativ kleineren Airbagvolumens (Fig. 2) während des Aufblasvorgangs das Vent (4) früh geöffnet und gleichzeitig zur Volumenbegrenzung die Fangbänder (6, 7) festgeklemmt werden, wobei über den Aktivierungszeitpunkt des Vents (4) und damit der Fangbandklemmung (5) eine Adaptivität, insbesondere eine Anpassung des Airbagvolumens an die Unfallschwere und/oder an Insassenparameter durchführbar ist oder diese Anpassung durch gesteuertes Öffnen des zweiten Vents (4') erfolgt.

12. Verfahren zur Steuerung einer Sicherheitseinrichtung nach Anspruch 8, **dadurch gekennzeichnet, dass** im Pre-Crash-Modus beim Vorliegen eines Pre-Crash-Aktivierungssignals durch Aktivierung des Gasgenerators (3) bei geschlossenem Vent (4) das kleine Airbagvolumen (A) befüllt wird und dann beim Erreichen eines bestimmten Airbaginnendrucks die Reißnähte (28, 29, 30) oder Reißnahtfelder (31, 32) aufreißen, wodurch das große Airbagvolumen (A + B) befüllt wird und wobei zudem oder alternativ das Vent (4) gegebenenfalls nach oder während des Aufblasvorgangs zur Anpassung der Airbagcharakteristik an die Unfallschwere und/oder an Insassenparameter zumindest teilweise geöffnet wird oder diese Anpassung durch gesteuertes Öffnen eines zweiten Vents (4') erfolgt, und
dass im In-Crash-Modus zur Befüllung eines relativ kleineren Airbagvolumens (A) während des Aufblasvorgangs das Vent (4) früh geöffnet wird, wobei ggf. durch eine gezielte Steuerung der Ventöffnung eine Adaptivität erreicht wird oder diese Adaptivität durch gesteuertes Öffnen des zweiten Vents (4') erfolgt.

## Claims

1. Safety device for a vehicle, in particular for a motor vehicle, with an airbag (2) that is folded in an non-activated basic state, which is inflatable in the direction of the interior of the vehicle with different volumes by means of a gas generator (3) when the safety device (1) is triggered through an activating signal, and
with crash sensors that detect a vehicle impact and in addition transmit the activating signal,
**characterised in that**
the crash sensors comprise both pre-crash sensors and in-crash sensors, whereby the pre-crash sensors usually detect an impending collision before the actual impact and for this case transmit a pre-crash activating signal as the activating signal and
the in-crash sensors detect an actual impact and for this case transmit an in-crash activating signal (fallback level) if the pre-crash sensors have not detected the impending collision and have not transmitted a pre-crash activating signal, and
that the airbag can be inflated to a larger airbag volume (Fig. 1; volumes A + B) and in contrast to this a relatively smaller airbag volume (Fig. 2; volume A), whereby the inflating process for the larger airbag volume (Fig. 1; volumes A + B) is activated through a pre-crash activating signal in a pre-crash mode and the inflating process for the relatively smaller airbag volume (Fig. 2; volumes A + B) is activated through an in-crash activating signal in an in-crash mode.

2. Safety device in accordance with claim 1, **characterised in that** the relatively smaller airbag volume (Fig. 2; volume A) corresponds to the airbag volume of a previous standard airbag and the larger airbag volume (Fig. 1; volumes A + B) in contrast is much larger, in particular larger by a factor of 1.3 to 2.0.

3. Safety device in accordance with claim 1 or 2, **characterised in that** the airbag volume controlled between a minimal volume (Fig. 2; volume A) and a maximal volume (Fig. 1; volumes A + B) is variable for intermediate sizes as well.

4. Safety device in accordance with one of the claims 1 to 3, **characterised in that** a gas outlet valve is provided as a controllable vent (4) for adjusting the interior pressure of the airbag and the inflation process on pre-crash activation is controlled preferably with a longer inflating period in comparison with in-crash triggering.

5. Safety device in accordance with one of the claims 1 to 4, **characterised in that** the volume variability of the airbag (2) is realised by means of catch straps (6, 7) that, on the one hand, are fixed to the inside of an unfolding airbag wall and, on the other, can each be pulled out of a fixed guide opening (9) and can be clamped there with a correspondingly variable catch strap length that determines the volume of the airbag, and that a controllable vent (4) for adjusting the interior pressure of the airbag is integrated in the airbag module housing (13; 18; 25; 26).

6. Safety device in accordance with claim 5, **characterised in that** the vent is opened by displacing a vent part (10; 19; 25) that releases at least one gas outlet opening preferably by means of pyrotechnics and a clamping device (5) for clamping the catch strap is directly or indirectly coupled and operable in this way.

7. Safety device in accordance with claim 6, **characterised in that** the controllable vent is formed by means of a pyrotechnically controlled adjustable valve slide (10) on a module housing (13) that releases gas outlet openings (12, 14) on the module housing (13) when adjusted and at the same time clamps at least one catch strap (6) in a clamp socket (16), and/or that the controllable vent is formed by a pyrotechnically controlled displaceable housing wall section (19; 25) of a module housing (18; 26), in particular a sliding or swivelling housing wall section, to which the gas generator (3) is preferably attached, in such way that on a displacement a part section of the module housing is opened, in particular by means of a rocker arm (22) and/or at a linear guide and at the same time at least one catch strap (6) can be clamped by means of the housing wall section or an operating lever.

8. Safety device in accordance with one of the claims 1 to 4, **characterised in that** the volume variability of the airbag is realised by means of covered folds with tear seams (28, 29, 30) and/or tear seam fields (31, 32), whereby the tear seams (28, 29, 30) and/or tear seam fields (31, 32) do not tear open, or tear only partially, for a relatively small airbag volume, and tear open successively in stages when a specific airbag internal pressure is reached or when specific airbag internal pressure stages are reached to develop a larger airbag volume (A + B), and
that a controllable vent (4) is provided for adjusting the interior pressure of the airbag that is integrated preferably in the airbag module housing.

9. Safety device in accordance with one of the claims 1 to 8, **characterised in that** a single-stage gas generator (3) is used as the gas generator.

10. Safety device in accordance with one of the claims 1 to 9, **characterised in that** a vent (4) is integrated in the module housing that can be triggered to control the gas volume flow to fill the airbag in the pre-crash mode with the large airbag volume (A + B) or with the smaller airbag volume (A) in the in-crash mode, and
that there is a second vent (4'), preferably integrated in the airbag and pyrotechnically releasable, which can be triggered to adapt the airbag, in particular to adjust the airbag volume to the severity of the accident and/or to the passenger parameters.

11. Method for controlling a safety device in accordance with one of the claims 5 to 7, **characterised in that**
when a pre-crash activation signal is received in the pre-crash mode the catch straps (6, 7) are free and unclamped and the airbag (2) is filled with the large airbag volume (Fig. 1) through the activation of the gas generator (3), whereby the vent (4) remains closed during the inflating process and whereby in addition or alternatively the vent (4) is opened at least partially after or during the inflation process to adjust the airbag characteristics to the severity of the accident and/or to the passenger parameters, or this adjustment takes place through the controlled opening of a second vent (4'), and that in the in-crash mode where an in-crash activation signal is given the vent (4) opens early during the inflation process to fill a relatively smaller airbag volume (Fig. 2) as fallback level and at the same time the catch straps (6, 7) are clamped tightly to limit the volume, whereby adaption can be carried out over the activation time of the vent (4) and thus of the catch strap clamp (5), in particular the adjustment of the airbag volume to the severity of the accident and/or to passenger parameters, or this adjustment is carried out by means of a controlled opening of the second vent (4').

12. Method for controlling a safety device in accordance with claim 8, **characterised in that** in the pre-crash mode where there is a pre-crash activation signal the small airbag volume (A) is filled by activating the gas generator (3) with the vent (4) closed and then when a specific airbag internal pressure is reached the tear seams (28, 29, 30) or tear seam fields (31, 32) tear open, which causes the large airbag volume (A + B) to be filled and whereby in addition or alternatively the vent (4) is opened at least partially after or during the inflation process to adjust the airbag characteristics to the severity of the accident and/or to the passenger parameters, or this adjustment takes place through the controlled opening of a second vent (4'), and that in the in-crash mode the vent (4) opens early during the inflation process to fill a relatively smaller airbag volume (A), whereby where applicable adaptivity is achieved through a deliberate control of the vent opening or this adaptivity takes place through the controlled opening of a second vent (4').

## Revendications

1. Dispositif de sécurité pour un véhicule, en particulier pour une voiture avec un airbag (2) replié dans un état non activé qui peut être gonflé en direction de l'intérieur de la voiture, avec différents volumes, lors du déclenchement du dispositif de sécurité (1) par un signal d'activation au moyen d'un générateur à gaz (3) et
avec un détecteur de collision qui reconnaît un choc du véhicule et qui émet alors un signal d'activation
**caractérisé par**
**le fait que** la technique sensorielle de détection de collision comprend aussi bien le détecteur de pré-collision que le détecteur in-crash en considérant
que le détecteur pré-collision reconnaît en règle générale déjà avant l'impact la survenue de la collision et que dans ce cas un signal d'activation pré-collision est émis comme signal d'activation et que la technique sensorielle in-crash reconnaît un impact réel et qu'elle émet dans ce cas un signal d'activation in-crash (niveau de recul) lorsque le détecteur pré-collision ne reconnaît pas auparavant la survenue de la collision et qu'aucun signal d'activation pré-collision n'a été émis et
que l'airbag est gonflable avec un volume important (illustration 1 ; volumes A + B) et à l'opposé, un volume relativement plus petit (illustration 2 ; volume A) en considérant qu'avec un signal d'activation pré-collision dans un mode pré-collision la procédure de gonflage est activée pour le plus grand volume de l'airbag (illustration 1 ; volumes A + B) et par un signal d'activation in-crash dans un mode in-crash la procédure de gonflage pour un volume de l'airbag relativement plus petit (illustration 2 ; volumes A + B).

2. Dispositif de sécurité selon revendication 1, **caractérisé par le fait que** le volume relativement plus faible de l'airbag (illustration 2 ; volume A) correspond à un volume d'un airbag standard jusqu'à présent et que le plus grand volume de l'airbag (illustration 1 ; volumes A + B) est relativement beaucoup plus important, c'est-à-dire augmenté d'un facteur de 1,3 à 2,0.

3. Dispositif de sécurité selon la revendication 1 ou 2 **caractérisé par le fait que** le volume de l'airbag est réglé entre un volume minimal (illustration 2 ; volume A) et un volume maximum (illustration 1 ; volumes A + B) et peut aussi varier pour des tailles intermédiaires.

4. Dispositif de sécurité selon l'une des revendications 1 à 3, **caractérisé par le fait qu'**un clapet de sortie de gaz comme clapet réglable (4) est prévu pour l'adaptation de la pression intérieure de l'airbag et que la procédure de gonflage lors d'une activation pré-collision est commandée de préférence avec un temps plus long de gonflage par rapport au déclenchement in-crash.

5. Dispositif de sécurité selon l'une des revendications 1 à 4, **caractérisé par le fait que** la variabilité du volume de l'airbag (2) est réalisée via des bandes de garde (6, 7) qui, d'une part, sont fixées sur la face intérieure d'une paroi de l'airbag qui se déploie (8) et qui, d'autre part, par le déploiement de l'airbag peuvent être étirées respectivement à partir d'une ouverture de guidage fixe et peuvent être fixées avec une longueur de bande de garde variable selon le volume de l'airbag et qu'un clapet réglable (4) pour l'adaptation de la pression intérieure de l'airbag est intégré dans le boîtier modulaire de l'airbag (13 ; 18 ; 25 ; 26).

6. Dispositif de sécurité selon la revendication 5, **caractérisé par le fait que** l'ouverture du clapet est réalisée de préférence par la pyrotechnique par la permutation d'au moins une partie du clapet libéré (10 ; 19, 25) d'une ouverture de sortie du gaz et est donc couplé et actionnable directement ou indirectement à un dispositif de blocage (5) pour la fixation de la bande de garde.

7. Dispositif de sécurité selon la revendication 6, **caractérisé par le fait que** le clapet réglable est construit sur un boîtier modulaire (13) par un curseur réglable (10) commandé par pyrotechnique qui libère des ouvertures de sortie du gaz (12, 14) en cas de réglage sur le boîtier modulaire (13) et bloque simultanément au moins une bande de garde (6) dans une cosse de serrage (16) et/ou
que le clapet réglable est constitué par une zone de la paroi du boîtier (19 ; 25) d'un boîtier modulaire (18 ; 26) commandé par pyrotechnique, en particulier une zone de paroi de boîtier pouvant être déplacée ou pivotée sur laquelle le générateur de gaz (3) est placé de préférence, de sorte qu'en cas de déport d'une zone partielle du boîtier modulaire, qui est spécialement ouvert au moyen d'un culbuteur (22) et/ou sur un guide linéaire et simultanément au moins une bande de garde (6) est blocable par la zone de la paroi du boîtier ou un levier d'actionnement.

8. Dispositif de sécurité selon l'une des revendications 1 à 4, **caractérisé par le fait que** la variabilité du volume de l'airbag est réalisée via des pliures avec des coutures (28, 29, 30) et/ou des surfaces piquées (31, 32) en considérant que les coutures (28, 29, 30) et/ou les surfaces piquées (31, 32) ne se déchirent pas ou seulement partiellement avec un volume d'airbag relativement faible et que lors de l'atteinte d'une certaine pression intérieure dans l'airbag ou, lors de l'atteinte d'un certain niveau selon une échelle de pression intérieure dans l'airbag, se déchirent pour le développement d'un plus grand volume de l'airbag (A + B) et
qu'un clapet de sortie du gaz comme clapet réglable (4) pour l'adaptation de la pression intérieur de l'airbag est prévu qui sera de préférence intégré au boîtier modulaire.

9. Dispositif de sécurité selon l'une des revendications 1 à 8, **caractérisé par le fait qu'**un générateur à gaz à un seul niveau (3) est utilisé comme générateur à gaz.

10. Dispositif de sécurité selon l'une des revendications 1 à 9, **caractérisé par le fait qu'**un clapet (4) est intégré dans le boîtier modulaire, lequel peut être déclenché pour le réglage du flux de gaz pour le remplissage de l'airbag dans le mode pré-collision avec un grand volume de l'airbag (A + B) ou dans le mode in-crash avec moins de volume de l'airbag (A) et
u'un second clapet (4) est intégré de préférence à l'airbag et peut être déclenché par pyrotechnique, lequel est réglable pour une capacité d'adaptation de l'airbag, en particulier une adaptation du volume de l'airbag à la gravité de l'accident et/ou aux paramètres des passagers.

11. Procédure de réglage d'un dispositif de sécurité selon l'une des revendications 5 à 7, **caractérisée par**
**le fait que** dans le mode pré-collision, lorsqu'un signal d'activation pré-collision a été émis, les bandes de garde (6, 7) sont libres et débloquées et que l'airbag (2) est rempli d'un grand volume (illustration 1) par l'activation du générateur à gaz (3) de l'airbag (2), tandis que le clapet (4) reste fermé pendant la procédure de gonflage et qu'en outre ou en alternative le clapet (4) est ouvert au moins partiellement, éventuellement après ou pendant la procédure de gonflage pour une adaptation de la caractéristique de l'airbag à la gravité de l'accident et/ou aux paramètres des passagers ou que cette adaptation est réalisée par une ouverture sur commande d'un second clapet (4) et
que dans le mode in-crash, en cas d'émission d'un signal d'activation in-crash comme niveau de recul pour le remplissage d'un volume d'airbag relativement plus faible (illustration 2) pendant la procédure de gonflage, le clapet (4) s'ouvre tôt et, simultanément, que les bandes de garde (6, 7) sont bloquées pour la limitation du volume avec la possibilité via le moment d'activation du clapet (4) et donc du blocage de la bande de garde (5) de réaliser une adaptation du volume de l'airbag à la gravité de l'accident et/ou aux paramètres des passagers ou de réaliser cette adaptation par l'ouverture par commande du second clapet (4).

12. Procédure pour la commande d'un dispositif de sécurité selon la revendication 8, **caractérisée par le fait qu'**en mode pré-collision, lorsqu'un signal de pré-collision a été émis, en actionnant le générateur à gaz (3) lorsque le clapet (4) est fermé, le petit volume d'airbag (A) est rempli et qu'ensuite lors de l'atteinte d'une certaine pression intérieure de l'airbag, les coutures (28, 29, 30) ou les surfaces piquées (31, 32) se déchirent et qu'un plus grand volume d'airbag (A + B) est rempli et qu'en outre ou en alternative le clapet (4) est éventuellement ouvert au moins partiellement après ou pendant la procédure de gonflage pour l'adaptation de la caractéristique de l'airbag à la gravité de l'accident et/ou aux paramètres des passages ou que cette adaptation est réalisée par l'ouverture commandée d'un second clapet (4) et que dans le mode in-crash pour le remplissage d'un volume relativement plus faible (A) pendant la procédure de gonflage le clapet (4) est ouvert tôt tandis qu'éventuellement une commande ciblée de l'ouverture du clapet donne la possibilité d'adaptation ou que cette capacité d'adaptation est réalisée par l'ouverture commandée du second clapet (4).
